# EUROPEAN PATENT SPECIFICATION

(11) **EP 0 598 533 B1**
(45) Date of publication and mention of the grant of the patent: **31.03.1999**
(21) Application number: 93308898.1
(22) Date of filing: 08.11.1993
(51) Int. Cl.: H04B 1/12, H04N 5/21

(54) **Method and apparatus for broadband interference reduction**
Verfahren und Vorrichtung zur Verminderung von Breitbandinterferenz
Procédé et dispositif pour reduction d'interférence à large bande

(30) Priority: 17.11.1992 GB 9224116
(43) Date of publication of application: 25.05.1994
(73) Proprietor: NORTHERN TELECOM LIMITED, Montreal, Quebec H2Y 3Y4 (CA)
(72) Inventor: Hudson, John Edward, Stansted, Essex CM24 8LR (GB); Rickard, Robin Paul, Bishop's Stortford, Herts (GB); Reed, Christopher John, Harlow, Essex CM19 5NY (GB)
(74) Representative: Ryan, John Peter William

(56) References cited:
- EP-A- 0 221 475
- EP-A- 0 289 617
- US-A- 4 912 557

## Description

This invention relates to a method and apparatus for reduction or cancellation of interference in a broadband radio frequency link, such as a satellite TV link.

Interference problems arise between FM TV carriers with the same centre frequency but at different polarisations. It has been established by experiment that an isolation of approximately 30 dB is required between the carriers for the interference to be invisible to the human eye, if both carriers are at the same centre frequency. However, during unfavourable propagation conditions the isolation between the polarisation can fall to 20 dB or less. At present this potential problem is avoided by offsetting the carrier frequencies of TV signals, since it has been observed that less isolation is required in this case. However, the solution is not ideal as more TV channels could be transmitted in a given band if this were not necessary. Similar problems arise when interference from a terrestrial microwave link is received in the sidelobes of a radio frequency antenna. A paper "Adaptive antennas for UHF braodcast reception" by MD Windram et al, IEE Proc., Vol 127, Pt F, No. 4, August 1980 discusses some of these problems.

A great deal of work on reduction of interference has been carried out in the field of adaptive antennas for military applications, and the techniques used fall into the categories of Perturbation Loop, Correlation Loop, and Direct Solution, in order of increasing complexity and speed. However, these techniques are generally applied in the known absence of the wanted signal and they are simply aimed at minimising the power in a given channel. This is achieved by generating weighting values in amplitude and phase to apply to the signals picked up from the elements of an antenna array, such that the reception pattern of the array is given nulls in the direction of arrival of the interference source.

Such systems could conceptually be adapted for the present requirement, but the difference here is that the wanted signal carrier is present during adaptation against the interference. It is assumed that a channel is available carrying a sample of the interfering signal. The algorithm could then control a single weight which adjusts the sample of the interference signal in amplitude and phase and then adds this onto the main channel to cancel the interference on that channel vectorially.

However, IF carrier power minimisation algorithms are of limited value if the interference is at a low level relative to the wanted signal, and also if the sample of interference is corrupted with wanted signal. Hence these techniques are only of value at the lower end of the carrier-to-interference ratio range in the requirement, i.e. when the interference is dominating the wanted signal.

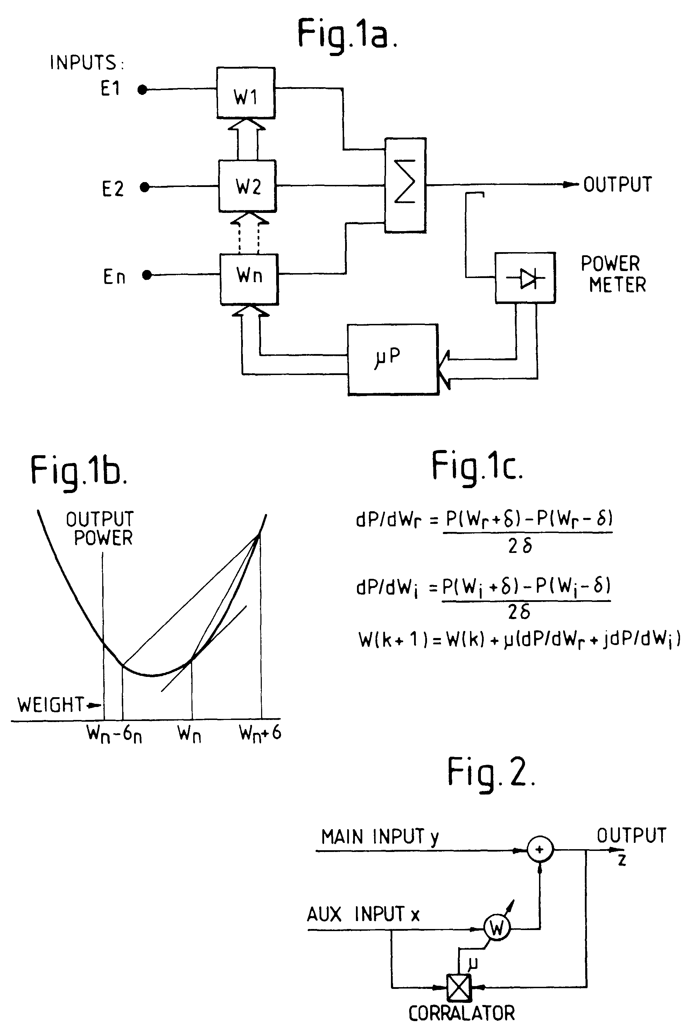

Fig. 1a shows a block diagram of a simple perturbation loop. The algorithm perturbs a weight as shown in Fig. 1b both up and down in value, and performs a measurement of output power at each point. The gradient of the function of output power against weight value is then calculated, and the weight is then updated in the direction of reduced output power. The update equation is given in Fig. 1c, showing that the update step sizes are scaled by the gradient to give a constant loop stability. However, this equation assumes the absence of a wanted signal masking the changes in interference power. In the case of this interference canceller, it is not possible to adjust sensibly the step sizes in this situation, and so they would be set to 1 LSB to ensure loop stability.

A basic correlation loop is shown in Fig. 2. in common with the perturbation loop, the correlation loop drives the weights on the basis of an estimate of the gradient of the output power as a function of weight value. The gradient is calculated by the correlation between the output signal from the canceller and the input channel carrying the sample of interference. The complex correlation can be performed digitally, and requires the signals to be converted to in phase and quadrature components at baseband.

Since both the perturbation and the correlation techniques are based on steepest descent gradient measurement algorithms, they will both settle at the same solutions albeit at different rates. The perturbation algorithm can also be given a low loop gain to minimise weight jitter, by basing each weight update on the average of a large number of perturbation measurements. The perturbation processor should in principle be able to produce nulls as deep as the correlation processor. The difference between the two techniques is in speed and cost.

The direct solution technique is used in adaptive antenna systems when the shortest possible adaptation time constants are required. This is an open loop approach, i.e. the weights are calculated directly from a measure of the correlation between the signals from each element of the antenna without any feedback. Because of the inaccuracies involved in analogue weighting, this Approach is restricted to digital weighting of digitised signals. EP-A1-0289617 (Kokusai Denshiin Denwa) provides a system for suppressing signals from an interference source which arrive from a different direction relative to the intended signal source.

According to the present invention there is provided a method of reducing interference in a first broadband radio frequency link signal channel A; wherein an interfering signal channel B is constituted by a second broadband radio frequency link having the same or offset carrier frequency as the first link, the two links having different polarisations, the method comprising the steps of: receiving channel A and channel B signals; weighting channel B signals to provide weighted channel B signals; summing channel A signals with weighted channel B signals; splitting the summed channel signals, using splitter having first and second outputs, to provide reduced interference channel A signals at a first output; selecting a frequency portion of the signals from the second output wherein a predetermined frequency or band of frequencies is known to be absent, measuring the signal power in said frequency portion to provide feedback control signals; wherein the feedback control signals act to control the weight(s) applied to the channel B signals; wherein the feedback control signals are derived to apply a weight control algorithm to the weight(s) such that the signal power in the summed signals in channel A signals due to the interfering signal in the other channel is reduced or cancelled.

In a preferred embodiment of the invention wherein the radio frequency link signal is a TV signal, the portion of the radio frequency link signal selected comprises the vertical blanking interval of the demodulated television signal. In a further preferred embodiment of the invention the perturbation algorithm is applied independently to a series of time delayed weights the outputs of which are all summed with the radio frequency link signal.

In accordance with a second aspect of the invention, there is provided an apparatus for reducing interference in a broadband radio frequency link signal channel A wherein an interfering signal channel B is constituted by a second radio frequency link having the same or offset carrier frequency as the first link, the two links having different polarisations, the apparatus comprising: paths for receiving channel A and B signals; weighting means for weighting channel B signals to provide weighted channel B signals; summing means for summing channel A signals with weighted channel B signals; splitting means having first and second outputs for splitting the summed channel signals to provide reduced interference channel A signals at a first output; selecting means for selecting a frequency portion of the signals from the second output wherein a predetermined frequency or band of frequencies is known to be absent; feedback means for measuring the signal power in said frequency portion and to provide feedback control signals; wherein the feedback control signals act to control a weight control algorithm to the weight(s) applied to the channel B signals such that the signal power of channel A signals due to the interfering signal in the other channel is reduced or cancelled.

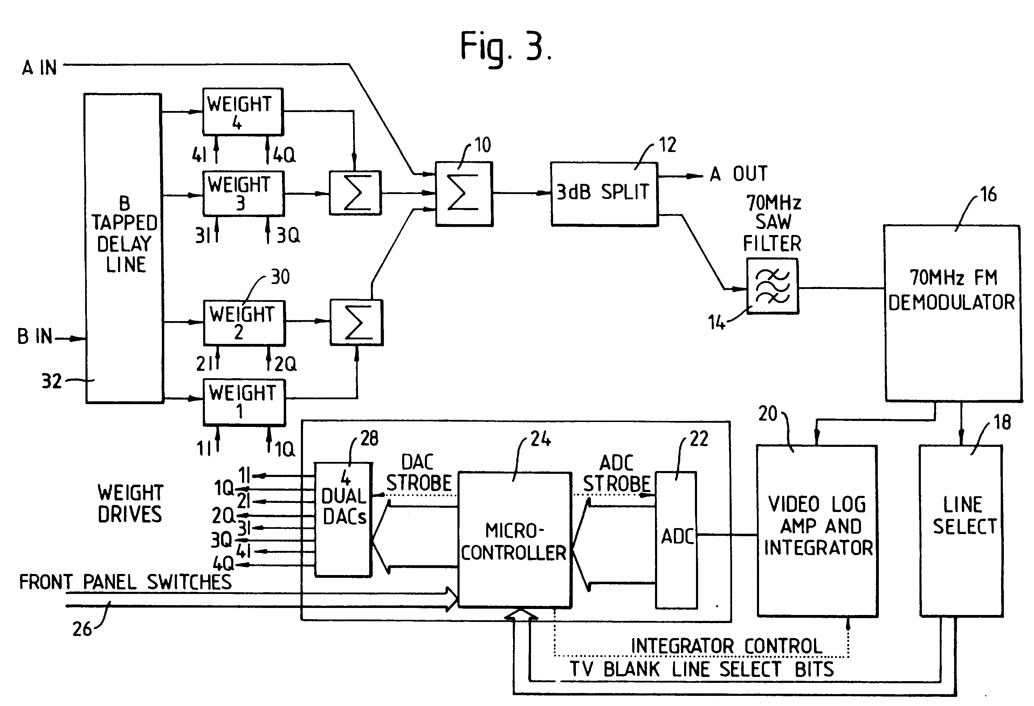

Embodiments of the invention will now be described with reference to the accompanying drawings, wherein:-
Figs.1a-1c illustrate the configuration and operation of a basic perturbation processor (already referred to);
Fig. 2 illustrates a basic correlation loop;
Fig. 3 is a block diagram of an arrangement for cancelling interference on a single radio frequency channel, and
Fig. 4 is a block diagram of an arrangement for cancelling cross-polarisation interference between two radio frequency TV channels having the same carrier frequency with orthogonal polarisations.
In the arrangement of Fig. 3 the wanted signal channel is identified as A and the interference is identified as channel B. It is assumed that, in the case of a satellite radio frequency down link, the radio frequency signals have already been down converted to VHF frequencies. The channel A signal is summed with the weighted signal B in summing network 10. The summed signals are fed to a 3 dB splitter 12 one of the outputs of which is the output A channel signal. The other splitter output provides the input to a feedback loop to control the weights applied to the B signal. The feedback input is first passed through a bandpass filter 14, typically for television signals MHz with a bandwidth of 20 MHz to define the adaptation band. The filter signal is applied to a demodulator 16 and demodulated to provide demodulated analogue signals. The demodulated signals are applied to a line select circuit 18 and separately to an envelope detection circuit 20, e.g. for TV signals a video logarithmic amplifier and integrator. The amplified and integrated analogue signals are then converted to digital signals in analogue-to-digital converter (ADC) 22. Meanwhile the line select circuit 18 is programmed to select those lines of the TV signal which are known to have an absence of predetermined signal frequency. For example, the line select circuit 18 detects line and frame synch in 525 or 625 line TV signals. The wanted signal is defined as the one from which the synch is detected, i.e. the more powerful signal. Pulses are provided for a microprocessor control circuit 24 corresponding to preselected lines known to be blank in the TV signal. Two lines are chosen per field, e.g. lines 10 and 16, which are used for up and down perturbations respectively in the perturbation algorithm subsequently utilised in controlling the weights applied to the B channel. In this way the perturbations are not visually intrusive on the TV picture. Any non-DC signal appearing in these two lines can therefore be assumed to be due to interference. The colour sub-carriers of both 525 and 625 line formats fall in the pass band of the video band-pass filter and form a convenient signal to which to tune the power detector circuit.

The circuitry for the video mode of operation will work with conventional NTSC, PAL, or SECAM composite video signals with negative-going synch pulses. The details of the timing are as follows: Lines 10 and 16 and the equivalent lines in the second field are selected for perturbation. On detection of the line synch pulse for line 10, the inphase or quadrature component of one of the weights is perturbed up in a digital value. 14 us is allowed for the weight to settle, and then the output from the video log amps is integrated for 38 us, after which time the analogue-to-digital converter is triggered. On line 18, the process is repeated for a down perturbation of the digital value of the same weight. In the second field the process is repeated on the two equivalent lines, but with the down perturbation before the up. The weight is then updated by 1 LSB in the direction that was found to give a decrease in integrated signal power, on the basis of a vote between the results for the two field. If the results for the up-down and down-up perturbation pairs disagree, then there is no update to the weight. Each Inphase and Quadrature component of each weight is updated on successive frames.

An initial accelerated "coarse" mode of adaptation can be set up, using switch controls 26, which gives larger perturbations and larger updates but which will achieve slightly less cancellation.

Once this coarse mode has been utilised, say 30 seconds it can then be followed by a "fine" mode to obtain maximum adaptation. The weights are produced by digital-to-analogue converters (DAC) 28 under the control of the micro controller 24, which also produces strobe timing for the ADC 22,m the DAC 28 and the envelope detection circuit 20. The weights provided by the DAC 28 are applied to weighting circuits 30. The interference signal in channel B is fed into a tapped delay line 32 having four outputs each of which is fed to a separate one of the weighting networks 30. The B channel signal is thus split into four parts which are delayed nominally by 0, 2.5, 5.0 and 7.5 ns respectively, relative to the through path of the A channel. These delay line outputs are weighted in amplitude and phase by the applied weights from the DAC 28 under the control of the microprocessor 24. The weighted outputs are combined with the A channel signal in summing network 10.

The arrangement of Fig. 3 in effect measures the signal-to-noise plus interference S/(N+I) by measuring the power in a portion of the TV signal which is known, a priori, to be blank. Any power detected is thus known to be noise or interference and the weight are driven to minimise this, thus maximising S/(N+I). The lines chosen for perturbation can be changed if required, e.g. by the inclusion of manually settable switches (not shown) inside the line select circuit 18.

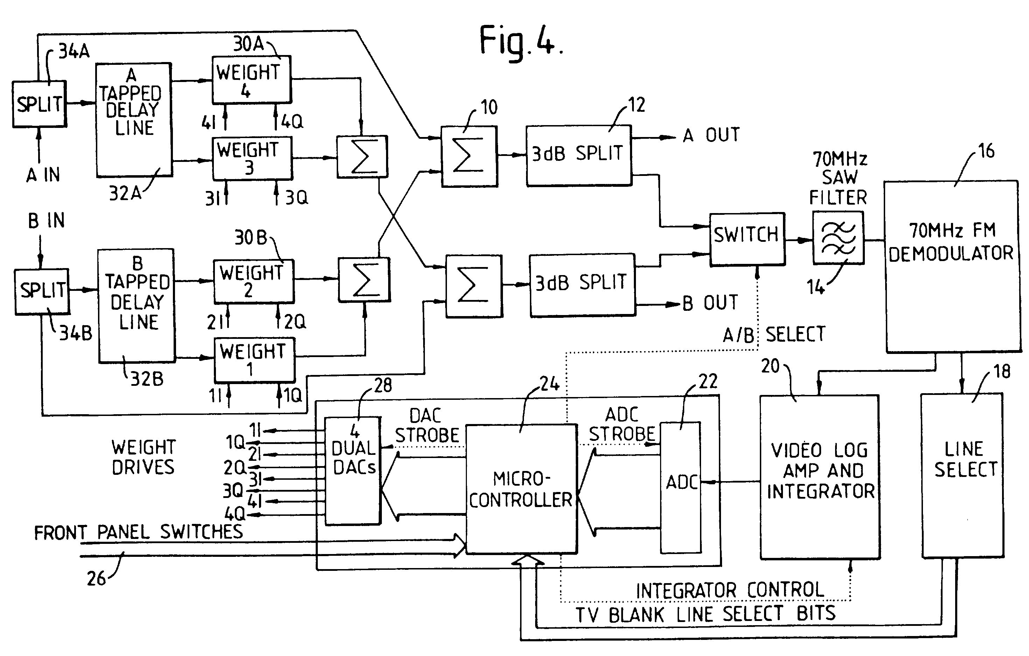

Fig. 4 shows a modified arrangement for the case where two channels are being received on the same carrier frequency but with orthogonal polarisations, a situation can potentially exist in some satellite television services. The control loop operates in the same way as for the single channel case, but is timeshared between the two channels. In this case, the interference is assumed to be cross polar in origin, i.e. cross coupling between the channel A and B. Hence a sample of channel A is delayed by various amounts in delay line 32A, weighted by weights 30A, and added to channel B, and a sample of channel B is also delayed in delay line 32B, weighted by weights 30B and added to channel A. In this case the number of taps per channel is restricted by the hardware to two, although future versions could be provided with more delay taps and weights if required in practice with a small cost penalty. Currently it is envisaged that two weights per channel will be sufficient.

The tapped delay lines 32 or 32A, 32B are implemented with suitably cut lengths of coaxial cable to provide the delay elements. One delay line is provided for each channel A, B consisting of a splitter 34A, 34B and five lengths of cable. One length of cable provides the main (unweighted) path for channel A and the other four are used as delay elements to be connected to the appropriate weights 30A, which are used to cancel interference on channel B. There is a similar delay line provided for channel B. The losses through the individual cables are compensated for with attenuation pads, and an initial amplification stage is provided to compensate for the overall loss.

A canceller could be built with only a single adaptive weight per channel, but this would not be able to achieve broadband cancellation if there were any dispersive processes occurring in either the interfering or cancelling paths. The use of a tapped delay line makes the arrangement tolerant to mismatches in path length between channel A and B, and also allows the use of cheaper and more dispersive weights.

## Claims

1. A method of reducing interference in a first broadband radio frequency link signal channel A;
wherein an interfering signal channel B is constituted by a second broadband radio frequency link having the same or offset carrier frequency as the first link, the two links having different polarisations,
the method comprising the steps of:
receiving channel A and channel B signals;
weighting channel B signals provide weighted channel B signals; summing channel A signals with weighted channel B signals;
splitting the summed channel signals, using splitter (12) having first and second outputs, to provide reduced interference channel A signals at a first output;
selecting a frequency portion of the signals from the second output wherein a predetermined frequency or band of frequencies is known to be absent, measuring the signal power in said frequency portion to provide feedback control signals;
wherein the feedback control signals act to control the weight(s) applied to the channel B signals;
wherein the feedback control signals are derived to apply a weight control algorithm to the weight(s) such that the signal power in the summed signals in channel A signals due to the interfering signal in the other channel is reduced or cancelled.

2. A method according to claim 1 wherein the radio frequency link signal is a TV signal, the portion of the radio frequency link signal selected comprises the vertical blanking interval of the demodulated television signal.

3. A method according to claim 1 or 2 wherein the perturbation algorithm is applied independently to a series of time delayed weights the outputs of which are all summed with the radio frequency link signal.

4. Apparatus for reducing interference in a broadband radio frequency link signal channel A wherein an interfering signal
channel B is constituted by a seccnd radio frequency link having the same or offset carrier frequency as the first link, the two links having different polarisations, the apparatus comprising:
paths (Ain, Bin)for receiving channel A and B signals;
weighting means (30) for weighting channel B signals to provide weighted channel B signals;
summing means (10) for summing channel A signals with weighted channel B signals;
splitting means (12) having first and second outputs for splitting the summed channel signals to provide reduced interference channel A signals at a first output;
selecting means (18) for selecting a frequency portion of the signals from the second output wherein a predetermined frequency or band of frequencies is known to be absent,;
feedback means (22,24,28) for measuring the signal power in said frequency portion and to provide feedback control signals;
wherein the feedback control signals act to control a weight control algorithm to the weight(s) applied to the channel B signals such that the signal power of channel A signals due to the interfering signal in the other channel is reduced or cancelled.

5. Apparatus according to claim 4 wherein the radio frequency link signal is a TV signal, the portion of the radio frequency link signal selected comprises the vertical blanking interval of the demodulated television signal.

6. Apparatus according to claim 4 or 5 wherein the perturbation algorithm is applied independently to a series of time delayed weights the outputs of which are all summed with the radio frequency link signal.

## Patentansprüche

1. Verfahren zur Verringerung von Störungen in einem ersten Breitband-Funkfrequenz-Verbindungsstrecken-Signalkanal A, bei dem ein störender Signalkanal B durch eine zweite Breitband-Hochfrequenz-Verbindungsstrecke mit der gleichen oder einer versetzten Trägerfrequenz wie die erste Verbindungsstrecke gebildet ist, wobei die beiden Verbindungsstrecken unterschiedliche Polarisationen aufweisen,
wobei das Verfahren die folgenden Schritte umfaßt:
Empfang von Kanal-A- und Kanal-B-Signalen;
Gewichtung von Kanal-B-Signalen zur Lieferung gewichteter Kanal-B-Signale;
Summierung von Kanal-A-Signalen mit gewichteten Kanal-B-Signalen;
Teilen der summierten Kanalsignale unter Verwendung eines Teilers (12) mit ersten und zweiten Ausgängen zur Lieferung von eine verringerte Störung aufweisenden Kanal-A-Signalen an einem ersten Ausgang;
Auswahl eines Frequenzteils der Signale von dem zweiten Ausgang, von denen bekannt ist, daß in ihnen eine vorgegebene Frequenz oder ein Band von Frequenzen fehlt, Messen der Signalleistung in dem Frequenzteil zur Lieferung von Rückführungs-Steuersignalen;
wobei die Rückführungs-Steuersignale zur Steuerung der Gewichtung oder der Gewichtungen wirken, die auf die Kanal-B-Signale angewandt werden;
wobei die Rückführungs-Steuersignale so abgeleitet werden, daß sie einen Gewichtungssteueralgorithmus auf die Gewichtung oder die Gewichtungen derart anwenden, daß die Signalleistung in den summierten Signalen in Kanal-A-Signalen aufgrund des störenden Signals in dem anderen Kanal verringert oder beseitigt ist.

2. Verfahren nach Anspruch 1,
bei dem das Hochfrequenz-Verbindungsstrecken-Signal ein Fernsehsignal ist, wobei der ausgewählte Teil des Hochfrequenz-Verbindungsstreckensignals das Vertikalaustastintervall des demodulierten Fernsehsignals umfaßt.

3. Verfahren nach Anspruch 1 oder 2,
bei dem der Perturbationsalgorithmus unabhängig auf eine Reihe von zeitverzögerten Gewichtungen angewandt wird, deren Ausgänge alle mit dem Hochfrequenz-Verbindungsstreckensignal summiert werden.

4. Vorrichtung zur Verringerung von Störungen in einem Breitband-Hochfrequenz-Verbindungsstrecken-Signalkanal A, bei dem ein störender Signalkanal B durch eine zweite Hochfrequenz-Verbindungsstrecke mit der gleichen oder einer versetzten Trägerfrequenz wie die erste Verbindungsstrecke gebildet ist, wobei die beiden Verbindungsstrecken unterschiedliche Polarisationen aufweisen und die Vorrichtung folgendes umfaßt:
Pfade (Ain, Bin) zum Empfang von Kanal-A- und Kanal-B-Signalen; Gewichtungseinrichtungen (30) zur Gewichtung von Kanal-B-Signalen zur Lieferung gewichteter Kanal-B-Signale;
Summiereinrichtungen (10) zum Summieren von Kanal-A-Signalen mit gewichteten Kanal-B-Signalen;
Teilereinrichtungen (12) mit ersten und zweiten Ausgängen zur Aufteilung der summierten Kanalsignale zur Lieferung von eine verringerte Störung aufweisenden Kanal-A-Signalen an einen ersten Ausgang;
Auswahleinrichtungen (18) zur Auswahl eines Frequenzteils der Signale von dem zweiten Ausgang, von denen bekannt ist, daß in ihnen eine vorgegebene Frequenz oder ein Band von Frequenzen nicht vorhanden ist;
Rückführungseinrichtungen (22, 24, 28) zur Messung der Signalleistung in dem Frequenzteil und zur Lieferung von Rückführungssteuersignalen;
wobei die Rückführungssteuersignale zur Steuerung eines Gewichtungssteueralgorithmus für die auf die Kanal-B-Signale angewandte Gewichtung oder die Gewichtungen wirken, derart, daß die Signal leistung von Kanal-A-Signalen aufgrund des störenden Signals in dem anderen Kanal verringert oder beseitigt ist.

5. Vorrichtung nach Anspruch 4,
bei dem das Hochfrequenz-Verbindungsstrecken-Signal ein Fernsehsignal ist, wobei der ausgewählte Teil des Hochfrequenz-Verbindungsstreckensignals das vertikale Austastintervall des demodulierten Fernsehsignals umfaßt.

6. Vorrichtung nach Anspruch 4 oder 5,
bei dem der Perturbationealgorithmus unabhängig auf eine Reihe von zeitverzögerten Gewichtungen angewandt wird, deren Ausgänge alle mit dem Hochfrequenz-Verbindungsstreckensignal summiert werden.

## Revendications

1. Procédé de réduction des interférences dans un premier canal A de signal de liaison à hautes fréquences à large bande,
dans lequel un canal B d'un signal d'interférences est constitué par une seconde liaison à hautes fréquences à large bande ayant la même fréquence porteuse que la première liaison ou une fréquence porteuse décalée, les deux liaisons ayant des polarisations différentes,
le procédé comprenant les étapes suivantes :
la réception des signaux du canal A et du canal B,
la pondération des signaux du canal B pour la formation de signaux pondérés du canal B,
la sommation des signaux du canal A et des signaux pondérés du canal B,
la division des signaux additionnés des canaux, à l'aide d'un répartiteur (12) possédant une première et une seconde sortie, pour la formation de signaux de canal A ayant des interférences réduites à une première sortie, et
la sélection d'une partie de fréquence des signaux de la seconde sortie, une fréquence ou une bande de fréquences prédéterminée étant connue comme étant absente, et la mesure de la puissance du signal dans cette partie de fréquence pour la création de signaux de commande de réaction,
dans lequel ds signaux de commande de réaction assurent le réglage de la pondération ou des pondérations appliquées aux signaux du canal B, et
dans lequel les signaux de commande de réaction sont dérivés afin qu'ils appliquent un algorithme de réglage de pondération à la pondération ou aux pondérations et que la puissance des signaux additionnés dans les signaux du canal A due à la présence du signal d'interférences de l'autre canal soit réduite ou compensée.

2. Procédé selon la revendication 1, dans lequel le signal de la liaison à hautes fréquences est un signal de télévision, la partie choisie du signal de liaison à hautes fréquences comprenant l'intervalle de suppression verticale du signal démodulé de télévision.

3. Procédé selon la revendication 1 ou 2, dans lequel un algorithme de perturbation est appliqué indépendamment à une série de pondérations retardées au cours du temps, ayant des signaux de sortie qui sont tous ajoutés au signal de la liaison à hautes fréquences.

4. Appareil destiné à réduire les interférences dans un canal A de signaux d'une liaison à hautes fréquences à large bande, dans lequel un canal B d'un signal qui interfère est constitué par une seconde liaison à hautes fréquences ayant la même fréquence porteuse que la première liaison ou une fréquence porteuse décalée, les deux liaisons ayant des polarisations différentes, l'appareil comprenant :
des trajets (Ain, Bin) destinés à recevoir les signaux du canal A et du canal B,
un dispositif (30) de pondération des signaux du canal B pour la formation de signaux pondérés du canal B, un dispositif (10) de sommation des signaux du canal A et des signaux pondérés du canal B,
un dispositif de répartition (12) ayant une première et une seconde sortie et destiné à diviser les signaux des canaux ayant subi la sommation pour la formation de signaux de canal A ayant des interférences réduites à une première sortie,
un dispositif de sélection (18) destiné à sélectionner une partie des signaux de la seconde sortie à une fréquence à laquelle on sait qu'une fréquence prédéterminée ou une bande de fréquences prédéterminée est absente, et
un dispositif de réaction (22, 24, 28) destiné à mesurer la puissance du signal dans la partie de fréquence et à donner des signaux de commande de réaction, et
dans lequel les signaux de commande de réaction assurent la commande d'un algorithme de réglage de pondération agissant sur la pondération ou les pondérations appliquées aux signaux du canal B, si bien que la puissance des signaux du canal A due au signal d'interférences de l'autre canal est réduite ou compensée.

5. Appareil selon la revendication 4, dans lequel le signal d'une liaison à hautes fréquences est un signal de télévision, la partie choisie du signal de la liaison à hautes fréquences comprenant l'intervalle de suppression verticale du signal démodulé de télévision.

6. Appareil selon la revendication 4 ou 5, dans lequel un algorithme de perturbation est appliqué indépendamment à une série de pondérations retardées au cours du temps donnant des signaux de sortie qui sont tous soumis à une sommation avec le signal de la liaison à hautes fréquences.
